Europäisches Patentamt

European Patent Office

Office européen des brevets

(11) Publication number: **0 498 118 A2**

# EUROPEAN PATENT APPLICATION

(21) Application number: **91311402.1**

(22) Date of filing: **06.12.91**

(51) Int. Cl.5: **G06F 11/30**

(30) Priority: **08.02.91 GB 9102719**

(43) Date of publication of application:
**12.08.92 Bulletin 92/33**

(84) Designated Contracting States:
**DE FR IT**

(71) Applicant: **ORBITEL MOBILE COMMUNICATIONS LIMITED Western Road**
**Bracknell, Berkshire(GB)**

(72) Inventor: **Aldridge, Christopher Anthony**
**31 Francis Street**
**Reading, Berkshire RG1 2OB(GB)**

(74) Representative: **Foster, David Martyn et al**
**MATHISEN MACARA & CO. The Coach House 6-8 Swakeleys Road**
**Ickenham Uxbridge UB10 8BZ(GB)**

(54) **Fault monitoring circuit.**

(57) A fault monitoring circuit is arranged to continuously monitor signals IP(0) to IP(N) from a number of different signal sources. A modulo-2 adder (3) combines the signals from the sources to produce a signal which is used by a linear feedback shift register to produce a signature indicative of those sequences within the signals from successive time intervals, so as to provide an indication of any faults in the signals IP(0) to IP(N).

Fig.1.

Rank Xerox (UK) Business Services

This invention relates to fault monitoring circuits. The invention has particular, although not exclusive, relevance to fault monitoring circuits for checking the reliability of timing signals distributed within a digital system.

Known circuits for monitoring the reliability of timing signals include so-called self-test circuits which look at periodic blocks of timing signals and check the timing signals against a generated sequence of timing signals. One example of such a circuit is shown in European patent no. 195164. Such a circuit suffers the disadvantage, however, that it is relatively complex and, furthermore, does not continuously monitor the timing signals.

It is an object of the invention to provide a fault monitoring system wherein these disadvantages are, at least, alleviated.

According to a first aspect of the present invention, there is provided a fault monitoring circuit comprising means for continuously processing successive sequences within a series of signals, to provide a series of signatures each indicative of those sequences within the series of signals, and means for comparing each signature with the signature obtained from previous sequences within the series of signals, so as to provide an indication of whether the signals have changed.

According to a second aspect of the present invention, there is provided a fault monitoring method comprising the steps of continuously processing successive sequences within a series of signals to provide a series of signatures each indicative of a sequence of signals, and comparing each signature with the signature obtained from a previous sequence within the series of signals so as to provide an indication of whether the signals have changed.

One embodiment of a fault monitoring circuit in accordance with the invention, together with a method of using the circuit will now be described, by way of example only, with reference to the accompanying drawings in which:-

Figure 1 is a block schematic diagram of the embodiment of the fault monitoring circuit, and

Figure 2 is a block schematic diagram of the linear feed-back shift register incorporated in the circuit of Figure 1.

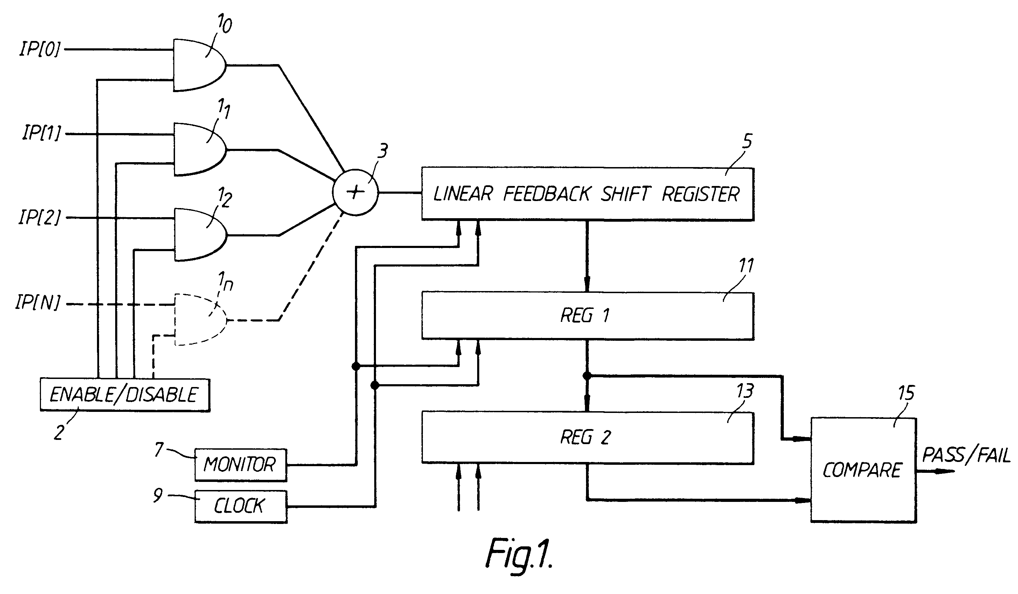

Referring firstly to Figure 1, the embodiment of the fault monitoring circuit to be described comprises a series of AND gates $1_0$, $1_1$, $1_2$, ... to $1_N$. Inputs to the AND gates 1 are provided from a series of circuits (not shown) each providing respective timing signals IP(0), IP(1), IP(2), ... IP(N). The other input of each of the AND gates 1 is provided from an enable/disable circuit 2 arranged to provide a series of enable or disable signals.

The outputs of the AND gates 1 are connected to a modulo-2 adder 3 whose output is connected to a linear feed-back shift register 5. Inputs to the linear feed-back shift register 5 are also provided from a monitor circuit 7 and a clock circuit 9.

The output of the linear feed-back shift register 5 is connected to a first register 11, whose output in turn is connected to a second register 13, both registers 11 and 13 having inputs from the monitor circuit 7 and the clock circuit 9. Outputs from the first register 11, and the second register 13, are connected to a comparator circuit 15.

The clock circuit 9 provides a continuous squarewave with a period of one cycle. The clock circuit 9 is required for the sequential operation of the linear feedback shift register 5, first register 11 and second register 13.

The monitor circuit 7 provides a pulse every I cycles with a width of 1 cycle. The monitor circuit 7 is required to schedule the transfer of the first register 11 to the second register 13, the contents of the linear feedback shift register 5 to the first register 11, and initialise the linear feedback shift register 5.

The widths (no. of sequential devices) of the linear feedback register 5, first register 11 and second register 13 are identical.

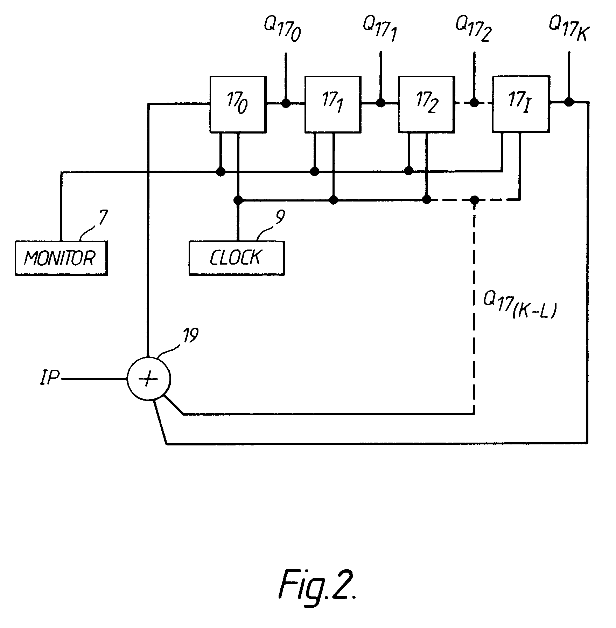

Referring now also to Figure 2, the linear feedback shift register 5 comprises a series of unit delay elements $17_0$, $17_1$, $17_2$, ... $17_K$ and a modulo-2 adder 19. The squarewave from the clock circuit 9 causes the operation $Q_{17(K)} = Q_{17(K-1)}$, $Q_{17(2)} = Q_{17(1)}$, $Q_{17(1)} = Q_{17(0)}$ and $Q_{17(0)} = 1P + Q_{17(K)} + Q_{17(K-i)}$, for the circuit shown. The pulse from the monitor circuit causes the operation $Q_{17(K)} = 0$, $Q_{17(2)} = 0$, $Q_{17(1)} = 0$, $Q_{17(1)} = 0$ thus initialising the linear feedback shift register 5. The signals $Q_{17(K)}$ and $Q_{17(K-i)}$ input to the modulo-2 adder 19 are termed the taps of the linear feedback shift register. For this application suitable taps in conjunction with $Q_{17(K)}$ can be used, i.e. the modulo-2 adder 19 may have more than 3 inputs. The number of stages K in the linear feedback shift register 5 is chosen such that $2^K - 1 > I$, where I is the period measured in numbers of clock cycles of the pulse produced by the monitor circuit 7.

The fault monitor circuit contains two instances of modulo-2 addition, circuits 3 and 19. For a modulo-2 adder with inputs $i_0$ $i_1$ $i_2$ ... $i_n$, the result is a 1 if an odd number of 1's are present in $i_0$ to $i_n$, and the result is a 0 if an even number of 1's are present in $i_0$ to $i_n$.

Linear feedback shift registers and modulo-2 addition are important elements used in digital error detection/correction applications and the above text should be considered as a brief insight to modulo-2 arithmetic in general.

The linear feed-back shift register 5 uses the output of the modulo-2 adder 3 to calculate a value which may be regarded as the signature for the sequences within the series of signals IP(0) ... to IP(N) over I cycles. Every I cycles a pulse produced by the monitor circuit 7, transfers the contents of the first register 11 to the second register 13, whilst the contents of the linear feed-back shift register 5 are transferred to the first register 11, the linear feed-back shift register 5 being initiallised such that a new signature can be calculated over the next I cycles.

Thus every I cycles, the comparator circuit 15 is effective to compare the outputs of the first register 11 and the second register 13, and produce a pass signal if the outputs of the two registers 11,13 are equal, and a fail signal if the outputs are not equal. If the comparator circuit 15 indicates that the outputs of the two registers 11,13 are not equal, then it may be concluded that one or more of the signals IP(0) to IP(N) are likely to have changed during the I cycles that the signature was calculated, as follows:.

If one of the signals IP(0) to IP(N) does change, due to a fault or otherwise, this will effect the signal produced by the modulo-2 adder 3 which is input into the linear feed-back shift register 5. The signature produced by the linear feed-back shift register over I cycles of the input timing signals IP(0) to IP(N) where the change occurred will change compared to the signature produced over the previous I cycles, as will be detected by the comparator circuit 15.

For successful operation of the fault monitoring circuit it will be seen that, if the input signals IP(0) to IP(N) have clock periods of J(0), J(1), .... J(N) clock cycles, then I/J(M) (M = 0 ... N) must be an integer for successful operation of the monitoring circuit. The mark to space ratio of the input signals IP(0) to IP(N) is, however, not a governing factor in the successful operation of the circuit.

If the comparator circuit 15 does produce a "fail signal" the monitoring circuit can also be used to locate any erroneous timing signal, or group of erroneous timing signals. This can be achieved by disabling all the input signals IP(0) to IP(N) using the enable/disable circuit 2, and then checking each of the signals IP(0) to IP(N) in turn. The linear feed-back shift register 5 may be used to produce a signature for each input signal IP(0) to IP(N), this then being compared by the comparator circuit 15 to a precalculated signature signal which was either measured when the input signal was known to be correct, or from a model.

It will be appreciated that fault monitoring circuits and methods in accordance with the invention provide continuous monitoring of the input timing signals IP(0) to IP(N). This is particularly useful during "burning in" or "soak test" of newly built equipment. Alternatively, the fault monitoring circuit may be used to provide an alarm function for unattended equipment.

It will also be appreciated that the particular circuit described herebefore, is a linear circuit obeying linear principles, i.e. superposition, and thus can be mathematically modelled. The circuit will be readily incorporable on to a silicon chip. In such a case the circuit may be arranged so as to monitor only the circuitry on the silicon chip, and detect internal faults on the chip which could be due to a number of causes, for example operating the circuitry incorporated on the chip out of the specification, harsh environmental conditions, an unclean power supply to the chip, or high levels of background radiation.

It will be appreciated that whilst circuits and methods in accordance with the invention find particular application in the monitoring of timing circuits, the invention is also applicable to the monitoring of other signals which are intended not to vary with time. In particular, whilst a fault monitoring circuit in accordance with the invention is particularly appropriate for the monitoring of digital signals, the linearity of the circuit is such that it is also appropriate for the monitoring of other signals, such as analogue signals. It will be noted that for an analogue system, elements used within the fault monitoring circuit will have to be suitable for analogue addition, multiplication, delay. The digital system described herebefore on the other hand incorporates a modulo-2 system only.

It will also be appreciated that whilst in the particular embodiment of the circuit described by way of example, a number of different circuits are monitored simultaneously, the invention is also applicable to the monitoring of a single signal source.

## Claims

1. A fault monitoring circuit characterised in that it comprises means (1,3,5) for continuously processing successive sequences within a series of signals (IP(0) to IP(N)), to provide a series of signatures each indicative of those sequences within the series of signals (IP(0) to IP(N)), and means (11,13,15) for comparing each signature with the signature obtained from previous sequences within the series of signals (IP(0) to IP(N)), so as to provide an indication of whether the signals have changed.

2. A fault monitoring circuit according to claim 1 in which the series of signals (IP(0) to IP(N)) are produced from a plurality of signal sources, and the means for processing (1,3,5) includes combination means (3) effective to produce a signal indicative of the signals from all the signal sources together at any particular time.

3. A fault monitoring circuit according to either of the preceding claims in which the series of signals (IP(0) to IP(N)) is a series of digital signals.

4. A fault monitoring circuit according to claim 3 in which the combination means (3) employs modulo-2 arithmetic.

5. A fault monitoring circuit according to any one of claims 2 to 4 including means (2) for selecting which of the signal sources produce signals which are processed by the means for processing (1,3,5), so as to enable any signal source producing erroneous signals to be located.

6. A fault monitoring circuit according to any one of the preceding claims in which the means for processing (1,3,5) includes a linear feedback shift (5) register arranged to produce the signatures.

7. A fault monitoring circuit according to any one of the preceding claims in which the means for comparing (11,13,15) comprises a comparator circuit (15) arranged to compare the outputs of two registers (11,13), the respective output being indicative of the signatures for two successive sequences of signals.

8. A fault monitoring method comprising the steps of: continuously processing successive sequences within a series of signals (IP(0) to IP(N)) to provide a series of signatures each indicative of those sequences within the series of signals, and comparing each signature with the signature obtained from previous sequences within the series of signals so as to provide an indication of whether the signals have changed.

9. A fault monitoring method according to claim 8 including the step of producing a series of signals (IP(0) to IP(N)) from the signals produced by a plurality of signal sources.

10. A fault monitoring method according to claim 9 including the step of selecting which of the signal sources produce signals which are processed by the means for processing, so as to locate any signal source producing erroneous signals.

Fig.1.

IP[0]

IP[1]

IP[2]

IP[N]

10

11

12

1n

3

+

5

LINEAR FEEDBACK SHIFT REGISTER

11

REG 1

13

REG 2

15

COMPARE

PASS/FAIL

ENABLE/DISABLE

2

7

MONITOR

9

CLOCK

EP 0 498 118 A2

Fig.2.